# EUROPÄISCHE PATENTSCHRIFT

(11) **EP 1 810 841 B1**
(45) Veröffentlichungstag und Bekanntmachung des Hinweises auf die Patenterteilung: **12.08.2015**
(21) Anmeldenummer: 06023614.8
(22) Anmeldetag: 14.11.2006
(51) Int. Cl.: B41M 5/24, B42D 25/24, B42D 25/41, B42D 25/43, B42D 25/378, B42D 25/324, B42D 25/346

(54) **Buchartiges Identifikationsdokument**
Identification document in booklet form
Document d'identité en forme de livre

(30) Priorität: 20.01.2006 DE 102006003072
(43) Veröffentlichungstag der Anmeldung: 25.07.2007
(73) Patentinhaber: Giesecke & Devrient GmbH, 81677 München (DE)
(72) Erfinder: Bauer, Michael, 82216 Maisach (DE); Zerbes, Jürgen, 81247 München (DE); Dörfler, Walter, 81373 München (DE)

(56) Entgegenhaltungen:
- WO-A1-00/73088
- WO-A1-01/54918
- WO-A1-2004/009371
- GB-A- 2 404 627
- RUDOLF L. VAN RENESSE: "OPTICAL DOCUMENT SECURITY (THIRD EDITION)", 2005, ARTECH HOUSE, BOSTON / LONDON, XP002715126, ISBN: 1-58053-258-6 * Seite 85 *

## Beschreibung

Die Erfindung betrifft ein buchartiges Identifikationsdokument, insbesondere einen Reisepass, einen Ausweis oder ein Visum, mit einem Bucheinband und wenigstens einem mit dem Bucheinband verbundenen Blatt sowie einen Bucheinband für die Herstellung von derartigen buchartigen Identifikationsdokumenten. Die Erfindung betrifft ferner ein Verfahren zur Herstellung derartiger Bucheinbände und buchartiger Identifikationsdokumente.

Ein buchartiges Identifikationsdokument, wie beispielsweise ein Reisepass, besteht meist aus einem Bucheinband aus einem Leinen- oder Kunststoffmaterial und einem Buchblock, der mit dem Bucheinband zu einem kleinen Büchlein gebunden wird. Der Buchblock umfasst in der Regel mehrere Blätter aus Papier oder einem papierähnlichen Material, um darauf Eintragungen machen zu können. Darüber hinaus weist ein solcher Buchblock meist ein oder mehrere Datenblätter mit einer personenbezogenen Information auf. Im Weiteren wird unter "personenbezogener Information" jede Information verstanden, die im Zusammenhang mit einer bestimmten Person steht. Die personenbezogene Information umfasst daher z. B. Name, Geburtstag, Photo, Unterschrift sowie biometrische Daten einer Person. Hingegen wird im Weiteren unter einer "nicht-personenbezogenen Information" jede Information gezählt, die nicht im Zusammenhang mit einer einzigen Person steht. Dazu zählen z. B. Länderbezeichnungen und andere allgemeine Daten, die nicht auf den Benutzer des Passes schließen lassen.

Die Herstellung eines solchen Reisepasses und die Einbringung von personenbezogener und nicht-personenbezogener Information auf den Blättern des Buchblockes ist hinlänglich bekannt. Auch wurden zur Erhöhung der Fälschungssicherheit bereits buchartige Wertdokumente vorgeschlagen, bei denen der Bucheinband und/oder Buchblock einen Datenträger mit Mikrochip aufweist. So lehrt die DE 10 2004 008 841 A1 ein buchartiges Wertdokument mit einem Datenblatt und einem in einer Buchdeckeneinlage des Bucheinbandes angeordneten Datenträger, in dem zumindest personifizierte Daten abgespeichert sind. Durch diese Anbindung des Bucheinbandes zum Buchblock wird die Fälschungssicherheit erhöht, da die wesentlichen Teile des Wertdokuments, nämlich Buchblock und Bucheinband, eine personenbezogene Information aufweisen. Die Herstellung eines buchartigen Wertdokuments gemäß der DE 10 2004 008 841 A1 erfolgt nach einem sehr aufwändigen Verfahren, bei dem mehrere Schichten und der Datenträger mittels einer Klebeschicht zu einem Verbund verbunden werden, der die Buchdeckeneinlage des Bucheinbandes des Wertdokuments bildet.

Neben dem aufwändigen Herstellungsverfahren weist das nach der DE 10 2004 008 841 A1 hergestellte Wertdokument den gravierenden Nachteil auf, dass die auf dem Datenträger gespeicherten Personendaten nur mit einem technischen Hilfsmittel gelesen werden können. Dadurch ist die Handhabung der Wertdokumente, z. B. beim Zurückgegeben mehrerer eingesammelter Pässe an die Passinhaber einer Reisegruppe, verhältnismäßig umständlich und erfordert entweder geeignete Auslesegeräte oder das Öffnen des Wertdokumentes, um den Namen des Passinhabers auf dem Datenblatt zu lesen.

GB 2 404 627 A offenbart ein Identifikationsdokument gemäß dem Oberbegriff des Anspruchs 1.

Der Erfindung liegt deshalb die Aufgabe zugrunde, ein buchartiges Identifikationsdokument der eingangs genannten Art vorzuschlagen, das trotz einfacher Herstellung ein hohes Maß an Fälschungssicherheit bietet und die Nachteile der bekannten gattungsgemäßen Identifikationsdokumente vermeidet. Außerdem sollen ein Bucheinband für die Herstellung eines derartigen buchartigen Identifikationsdokuments sowie ein Verfahren zur Herstellung eines buchartigen Identifikationsdokuments und eines Bucheinbandes angegeben werden.

Diese Aufgabe wird durch die Merkmale der unabhängigen Ansprüche gelöst. Weiterbildungen der Erfindung sind Gegenstand der abhängigen Ansprüche.

Erfindungsgemäß weist die Außenseite des Bucheinbandes eine mittels eines berührungslosen Markierungsverfahrens eingebrachte personenbezogene Information auf, wobei unter "Außenseite" die Seite des Bucheinbandes verstanden wird, die ein Betrachter ohne Öffnen des Identifikationsdokuments von der Vorder- und Rückseite des Bucheinbandes erkennt. Vorteilhafterweise wird durch die Erfindung die Anbindung des Bucheinbandes an das wenigstens eine Blatt des Buchblocks mit verhältnismäßig geringem Aufwand sichergestellt und die Fälschungssicherheit des Identifikationsdokuments erhöht, da für eine Fälschung auch die personenbezogene Information des Bucheinbandes nachgestellt werden müsste. Ein bloßer Austausch des Buchblocks durch den Buchblock einer anderen Person würde zu einer sofort erkennbaren Fälschung führen, weil die personenbezogene Information des Bucheinbandes und des Buchblocks verschieden wären.

Ein Identifikationsdokument mit einem gemäß der Erfindung personalisierten Bucheinband weist darüber hinaus den Vorteil auf, dass die Handhabung beim Zurückgeben des Dokuments erheblich verbessert wird, wenn beispielsweise der Name des Inhabers auf dem Bucheinband eingebracht ist. Aufgrund der auf der Außenseite des Bucheinbandes vorgesehenen personenbezogenen Information entfällt in den vorgenannten Fällen das Öffnen des Identifikationsdokuments, was z. B. bei größeren Reisegruppen eine erhebliche Vereinfachung der Passkontrollen bedeutet.

Die Erfindung ist aber nicht auf eine visuell wahrnehmbare personenbezogene Information des Bucheinbands beschränkt, sondern umfasst auch eine nur mithilfe technischer Hilfsmittel lesbare Information. In einem solchen Fall kann die Außenseite des Bucheinbandes an einem entsprechend ausgebildeten Lesegerät vorbeigeführt werden, wodurch ein Öffnen des Identifikationsdokuments überflüssig ist. Dadurch kann die Lesefehlerquote des Durchzugslesers, die bei geöffnetem Dokument relativ hoch ist, gesenkt werden. Auf diese Art und Weise ist es darüber hinaus auch möglich, einen im Buchblock des Identifikationsdokumentes angeordneten Chip freizuschalten, um das Auslesen der Daten des Chips zu ermöglichen.

Ein wesentlicher Vorteil der Erfindung besteht weiter darin, dass durch den Einsatz berührungsloser Markierungsverfahren die bisher bekannte Personalisierung des Bucheinbandes mittels auf einem Datenträger gespeicherter Information erheblich vereinfacht wird. Dennoch wird ein ähnlicher Fälschungsschutz wie mit dieser wesentlich aufwändigeren Personalisierungsmethode erreicht, da die berührungslose Markierung des Bucheinbandes zwar technisch verhältnismäßig einfach, aber mit erheblichen Investitionskosten für die Personalisierungsvorrichtung verbunden ist.

Unter berührungslosen Markierungsverfahren werden im Weiteren alle Verfahren verstanden, bei denen das mit der personenbezogenen Information zu versehende Substrat nicht mit der eingesetzten Markierungsvorrichtung in Kontakt kommt. Zu den berührungslosen Markierungsverfahren zählen beispielsweise die Lasermarkierung sowie berührungslose Tintenstrahl- und Thermosublimationsverfahren. Die erfindungsgemäß verwendeten Markierungsverfahren ermöglichen eine schnelle und äußerst flexible Einbringung der personenbezogenen Information auf dem Bucheinband, was mit konventionellen Druckverfahren nicht oder nur sehr eingeschränkt möglich ist.

In einer bevorzugten Ausführungsform ist vorgesehen, dass die personenbezogene Information in Form von alphanumerischen Zeichen, Barcodes, Mustern, Mikroschrift und/oder Bildern vorliegt. Bei den alphanumerischen Zeichen ist insbesondere an den Namen und den Vornamen sowie das Geburtsdatum des Inhabers des Identifikationsdokuments zu denken, wodurch der erfindungsgemäße Grundgedanke auf besonders einfache Weise verwirklicht wird. Sofern ein Barcode auf dem Bucheinband vorgesehen wird, können die Vorteile der Erfindung auf zuverlässige Weise unter Zuhilfenahme eines geeigneten Barcode-Lesegeräts erreicht werden. Darüber hinaus kann ein auf dem wenigstens einen Blatt des Identifikationsdokuments angeordneter Datenträger durch das Lesen des Barcodes für den eigentlichen Auslesevorgang freigeschaltet werden. Erfindungsgemäß kann die personenbezogene Information aber auch in Form eines Musters, einer Mikroschrift oder eines Bildes des Inhabers des Identifikationsdokuments vorliegen. Die heute bekannten berührungslosen Markierungsverfahren, die häufig eine computergestützte Aufarbeitung und Generierung der personenbezogenen Information umfassen, und mit denen eine Auflösung im Bereich weniger Mikrometer erzielt werden kann, setzen der Gestaltung der personenbezogenen Information auf dem Bucheinband kaum Grenzen. Es versteht sich von selber, dass die personenbezogene Information auch eine Kombination aus beispielsweise alphanumerischen Zeichen und einem Bild des Inhabers sein kann.

Die Information kann darüber hinaus sowohl visuell erfassbar als auch für das unbewaffnete Auge nicht sichtbar sein. Selbstverständlich ist es auch denkbar, dass ein Teil der personenbezogenen Information, z. B. der Name des Inhabers, visuell erkennbar und ein anderer Teil der Information, z. B. ein Infrarot(IR)-Barcode, nur unter Zuhilfenahme einer geeigneten Lesevorrichtung erfasst werden kann. Es ist demnach möglich, die personenbezogene Information für unterschiedliche Stufen der Sicherheit vorzusehen.

Erfindungsgemäß ist sowohl die Vorderseite als auch die Rückseite des Bucheinbandes jeweils mit wenigstens einem Teil der personenbezogenen Information versehen. Beispielsweise kann auf der Vorderseite der Name des Inhabers und auf der Rückseite des Bucheinbandes das Geburtsdatum oder eine maschinenlesbare Mikroschrift angeordnet sein, wobei erfindungsgemäß stets die auf den Betrachter gerichtete Außenseite von Vorder- und Rückseite die personenbezogene Information aufweist. Auch eine redundante Anordnung der personenbezogenen Information auf Vorder- und Rückseite des Bucheinbandes ist von Vorteil, da dadurch das Öffnen des Identifikationsdokumentes zwecks Zuordnung zu einer bestimmten Person auch dann entfällt, wenn das Dokument mit der Rückseite des Bucheinbandes auf den Betrachter gerichtet ist. Darüber hinaus kann es auch sinnvoll sein, die personenbezogene Information ausschließlich auf der Rückseite des Bucheinbandes anzuordnen, wenn, z. B. aufgrund nationaler Vorschriften, die Vorderseite des Bucheinbandes für Hoheitszeichen oder eine einheitliche Aufschrift reserviert bleiben muss.

In einer bevorzugten Ausführungsform ist vorgesehen, dass der Bucheinband wenigstens eine Laserstrahlung absorbierende Schicht aufweist, in die die personenbezogene Information durch Einwirkung von Laserstrahlung eingebracht ist. Im einfachsten Fall handelt es sich bei der wenigstens einen Laserstrahlung absorbierenden Schicht um eine nicht weiter behandelte Schicht aus Papier und/oder polymerem Material, welche zugleich die Au-ßenseite des Bucheinbandes bildet. Häufig wird der Bucheinband zum Schutz vor Beschädigung und ähnlichen äußeren Einflüssen auch mit einer Schutzschicht, z. B. aus Polyethylen (PE), Polyethylenterephthalat (PET), Polyvinylchlorid (PVC), Polycarbonat (PC), Latex oder anderen eine Schutzfunktion ausübenden Materialien versehen. Da diese Materialien Laserstrahlung in einem zur Lasermarkierung geeigneten Wellenlängenbereich absorbieren, können die bisher gefertigten Identifikationsdokumente mit einem solchen Bucheinband erfindungsgemäß mit der personenbezogenen Information versehen werden, ohne dass es einer zusätzlichen Laserstrahlung absorbierenden Schicht bedarf. Selbstverständlich ist es aber auch möglich, eine oder mehrere Schichten eines Folienverbundes vorzusehen, die in besonderem Maße für die Laserpersonalisierung geeignet sind. Beispielsweise kann der Bucheinband in wenigstens einer Schicht Laserstrahlung sehr gut absorbierende Zusatzstoffe, wie z. B. TiO₂, Rußpartikel, Infrarot-Absorber oder Interferenzpigmente, enthalten, um die personenbezogene Information zuverlässig und bei geringer Strahlintensität in den Bucheinband einbringen zu können. Durch lokale Einbringung der absorbierenden Zusatzstoffe in die wenigstens eine Schicht des Einbandes ist es darüber hinaus auch möglich, nur diese Bereiche für die Kennzeichnung mit personenbezogener Information vorzusehen, und alle übrigen Bereiche des Bucheinbandes aus einem Laserstrahlung nicht absorbierenden Material auszubilden. Dadurch können für die nicht absorbierenden Bereiche andere Materialeigenschaften bereitgestellt werden.

Als Strahlungsquellen kommen je nach dem für die Außenseite des Bucheinbandes verwendeten Materials CO₂-Laser Nd:YAG-Laser oder andere Lasertypen im Wellenlängenbereich von Ultraviolett (UV) bis zum fernen Infrarot (IR) infrage, wobei die Laser oft auch vorteilhaft mit Frequenzverdopplung, -verdreifachung oder einer noch größeren Frequenzvervielfachung arbeiten. Vorzugweise werden allerdings Laserquellen im nahen IR eingesetzt, da dieser Wellenlängenbereich gut zu den Absorptionseigenschaften der für die Personalisierung vorgesehenen und somit für den Bucheinband verwendeten Materialien passt. Die Spotgröße der Laserstrahlung kann je nach Anwendungsfall von wenigen Mikrometern bis hin zu einigen Millimetern variiert werden. Die Dauerleistung der für die Laserpersonalisierung verwendeten Laser liegt üblicherweise zwischen einigen wenigen Watt und einigen 100 Watt.

Wie bereits erwähnt, kann die personenbezogene Information sowohl in Form einer visuell erkennbaren als auch in Form einer visuell nicht erkennbaren Änderung der optischen Eigenschaften der wenigsten einen Laserstrahlung absorbierenden Schicht vorliegen. In letzterem Fall kann, z. B. durch in die wenigstens eine Schicht eingebrachte UV- oder IR-Farbstoffe und Einwirkung geeigneter Laserstrahlung, eine Änderung der Lumineszenzeigenschaften der Farbstoffe hervorgerufen werden, die nur mit entsprechenden technischen Hilfsmitteln erfasst werden kann. Eine solche personenbezogene Information stellt ein verstecktes Sicherheitsmerkmal dar, was die Fälschungssicherheit weiter erhöht. Neben den erwähnten UV- und IR-Farbstoffen sind darüber hinaus zahlreiche polymere Materialien bekannt, in die eine versteckte personenbezogene Information gemäß der vorstehenden Ausführungen eingebracht werden kann. Unter den zahlreichen, z. B. in der US 3,507,655 genannten Kunststoffen, sei hier PVC genannt.

Besonders bevorzugt ist allerdings eine personenbezogene Information in Form einer visuell erkennbaren Änderung der optischen Eigenschaften der wenigstens einen Schicht, weil dadurch ohne technische Hilfsmittel eine einfache Zuordnung des Identifikationsdokuments zum Inhaber möglich ist. Für diese Form der Laserpersonalisierung muss die Einwirkung der Laserstrahlung zu einer sichtbaren Änderung der optischen Eigenschaften führen, was materialabhängig in einer Farbaufhellung, Farbverdunklung oder Farbveränderung des personalisierten Bereichs gegenüber dem nicht personalisierten Bereich zu erkennen ist.

Darüber hinaus kann es zweckmäßig sein, wenn die personenbezogene Information mittels Laser in Form einer lokalen Änderung der Schichtdicke der wenigstens einen Schicht vorliegt. Bei der Änderung der Schichtdicke kann es sich zum einen um einen Materialabtrag, also eine Laserablation, handeln, welcher auch mit einer visuell erkennbaren Änderung der optischen Eigenschaften der personalisierten Bereiche verbunden sein kann. Das Ausmaß der Änderung der Schichtdicke wird dabei in an sich bekannter Weise durch eine entsprechende Einstellung der auf die Laserstrahlung absorbierende Schicht einwirkenden Strahlungsintensität festgelegt. In jedem Fall ist die personenbezogene Information gemäß dieser Ausführungsform auch haptisch erfassbar, wodurch die Fälschungssicherheit weiter erhöht wird.

In einer weiteren Variante ist vorgesehen, dass die personenbezogene Information eine farblose Lasergravur ist. Dabei wird in die wenigstens eine Laserstrahlung absorbierende Schicht der Außenseite des Bucheinbandes mithilfe eines Lasers die personenbezogene Information in Form einer Änderung der Oberflächenbeschaffenheit eingebracht. Die durch die Einwirkung der Laserstrahlung herbeigeführte lokale Änderung der Oberflächenbeschaffenheit äußert sich z. B. darin, dass die diffus lichtstreuenden Eigenschaften des Bereichs personenbezogener Information sich von den diffus lichtstreuenden Eigenschaften der Bereiche ohne personenbezogene Information unterscheiden. Obwohl der Bereich personenbezogener Information keinen farblichen Kontrast zu seiner Umgebung aufweist, ist die personenbezogene Information unter einem bestimmten Betrachtungswinkel vom Betrachter zu erkennen. Eine gemäß der vorstehenden Variante ausgebildete personenbezogene Information in Form einer farblosen Lasergravur ist in der DE 44 45 822 A1 näher beschrieben.

Besonders bevorzugt ist es dabei, wenn die wenigstens eine Schicht wenigstens ein Metall aufweist und die Laserablation eine Demetallisierung ist. Dabei können alle Metalle Verwendung finden, die durch Laserablation aus der wenigstens einen Schicht entfernt werden können. Zu denken ist dabei an Kupfer, Chrom, Nickel sowie verschiedene Legierungen dieser und anderer Metalle, die dem Fachmann an sich bekannt sind. Sofern die wenigstens eine Schicht zumindest lokal eine zusammenhängende, elektrisch leitfähige und/oder magnetische Metallschicht ist, können die elektrische Leitfähigkeit oder die magnetischen Eigenschaften der personalisierten Bereiche verändert werden und dadurch ein zusätzliches Sicherheitsmerkmal geschaffen werden.

Gemäß einer anderen bevorzugten Ausführungsform ist vorgesehen, dass die personenbezogene Information in Form einer fühlbaren Reliefstruktur, insbesondere als Noppen, vorliegt. Mittels eines Lasers in einem Sicherheitspapier erzeugte fühlbare Markierungen in Form einer Reliefstruktur sind aus der WO 2004/ 009371 A1 bekannt. Darüber hinaus beschreibt dieses Dokument auch ein Sicherheitspapier mit einer Beschichtung, bei dem die Reliefstruktur im Bereich der Beschichtung angeordnet ist. Das in dieser Anmeldung beanspruchte buchartige Identifikationsdokument kann somit einen Bucheinband aus Papier oder einem papierähnlichen Material mit einer darüber angeordneten, Laserstrahlung des eingesetzten Wellenlängenbereichs im Wesentlichen nicht absorbierenden Beschichtung aufweisen, wobei durch Einwirkung der Laserstrahlung eine Reliefstruktur im Papier und in der darüber liegenden Beschichtung erzeugt wird. Sofern der Bucheinband weiter eine Metallschicht aufweist, wird diese im Bereich der Reliefstruktur entfernt. Durch die Einbringung der Reliefstruktur im Papiersubstrat und der darüber liegenden Beschichtung kann in dieser speziellen Ausführungsform bei gleichzeitigem Erhalt der Beständigkeit des Bucheinbandes gegen äußere Einflüsse ein haptisch gut erfassbares zusätzliches Sicherheitsmerkmal im Bereich der personenbezogenen Information geschaffen werden.

Die personenbezogene Information kann darüber hinaus auch mit einem berührungslosen Tintenstrahl- oder Thermosublimationsverfahren auf den Bucheinband aufgebracht werden. Zu den berührungslosen Tintenstrahl-("Ink Jet"-)Verfahren werden im Weiteren sowohl kontinuierliche als auch diskontinuierliche ("Drop-on-demand"-)Verfahren verstanden. Die für die Aufbringung der personenbezogenen Information mittels der bevorzugten Tintenstrahl- oder Thermosublimationsverfahren geeigneten Materialien umfassen sowohl Papier und papierähnliche Substrate als auch bestimmte Kunststoffe, wie z. B. Polycarbonat (PC), Polyethylen (PE) oder Polyethylenterephthalat (PET). Zur Verbesserung der Haftung der für diese Verfahren eingesetzten Farben bzw. Tinten auf dem Bucheinband kann dieser zusätzlich mit einer geeigneten Haftvermittlungsschicht versehen sein. Die Haftvermittlungsschicht kann dabei vollflächig oder nur im Bereich der einzubringenden personenbezogenen Information auf dem Bucheinband angeordnet sein.

Der Vorteil der genannten berührungslosen Tintenstrahl- oder Thermosublimationsverfahren gegenüber der Personalisierung mittels Lasern besteht vor allem in der Möglichkeit, die personenbezogene Information in nahezu beliebigen Farben oder Farbkombinationen auf dem Bucheinband aufzubringen. Darüber hinaus ist es insbesondere im Falle der Tintenstrahlverfahren möglich, die Tinte mit Zusatzstoffen, z. B. den oben genannten UV- und IR-Farbstoffen, zu versehen, um die Fälschungssicherheit weiter zu erhöhen.

Wenn auch im Weiteren nicht bevorzugt, ist es grundsätzlich denkbar, dass die personenbezogene Information ein Aufdruck, insbesondere ein Stichtief- oder Offsetdruck und/oder ein Prägefolienelement, insbesondere Heißprägefolienelement, ist.

Darüber hinaus kann es zweckmäßig sein, wenn der Bucheinband eine nicht-personenbezogene Information, insbesondere alphanumerische Zeichen, Barcodes, Muster, Mikroschriften, Beugungsstrukturen und/oder Bilder, aufweist. Eine solche nicht-personenbezogene Information kann grundsätzlich wieder in jeglicher Form, insbesondere als Aufdruck und/ oder Prägefolienelement vorliegen. Besonders bevorzugt ist es allerdings, dass die nicht-personenbezogene Information mittels eines berührungslosen Markierungsverfahrens eingebracht ist. Neben den Vorteilen, die sich im Zusammenhang mit diesen berührungslosen Verfahren und der personenbezogenen Information ergeben, ist als weiterer Vorteil zu nennen, dass die Außenseite des Bucheinbandes mit den erfindungsgemäß beanspruchten Markierungsverfahren in einem einzigen Arbeitsgang mit sämtlicher personen- und nicht-personenbezogener Information versehen werden kann.

Darüber hinaus kann gemäß einer bevorzugten Ausführungsform die personenbezogene und die nicht-personenbezogene Information des Bucheinbandes zumindest teilweise überlappend angeordnet sein und/ oder in einem inneren Sinnzusammenhang stehen. Im Weiteren wird unter "überlappender Anordnung" jede Anordnung verstanden, bei der zumindest ein Teil der personenbezogenen Information in einem Bereich des Bucheinbandes eingebracht ist, in dem auch eine nicht-personenbezogene Information angeordnet ist.

Denkbar ist beispielsweise ein Muster oder ein Hoheitszeichen als nicht-personenbezogene Information, in das mittels eines berührungslosen Markierungsverfahrens zumindest ein Teil der personenbezogenen Information eingebracht ist. Zweckmäßig ist es ferner, wenn die nicht-personenbezogene Information in Form einer Beugungsstruktur oder eines Hologramms vorliegt und die personenbezogene Information mittels des berührungslosen Markierungsverfahrens überlappend zur Beugungsstruktur oder zum Hologramm angeordnet ist. Z. B. kann die personenbezogene Information in einer Beugungsstruktur, die unter bestimmten Beobachtungsbedingungen ein beugungsoptisches Bild rekonstruiert, als Unterbereich ausgebildet sein, der nicht an der Rekonstruktion des beugungsoptischen Bildes teilnimmt. Besonders zweckmäßig ist dabei die Einbringung der personenbezogenen Information, also des Unterbereichs, durch die Einwirkung eines Lasers auf eine Laserstrahlung absorbierende Schicht der Beugungsstruktur. Weitere Einzelheiten zu der vorstehend beschriebenen speziellen Ausführungsform können der EP 1197 350 A2 und der WO 2005/009751 A2 entnommen werden. Auf die vorstehend beschriebene Art und Weise kann eine nicht-personenbezogene Information des Bucheinbandes auf einfache und zugleich visuell ansprechende Weise mit der personenbezogenen Information ergänzt werden.

Um die auf dem Bucheinband eingebrachten Informationen vor äußeren Einflüssen zu schützen, kann über der nicht-personenbezogenen Information und/oder über der personenbezogenen Information wenigstens eine Schutzschicht angeordnet sein. Bei der Schutzschicht kann es sich um eine nach Aufbringung der Informationen angeordnete Schutzschicht handeln. Denkbar ist es aber auch, eine transparente und im Wellenlängenbereich der Laserstrahlung nicht absorbierende Schutzschicht vor der Personalisierung über der im Wellenlängenbereich der eingesetzten Laserstrahlung absorbierenden wenigstens einen Schicht anzuordnen, so dass die Laserpersonalisierung in der absorbierenden Schicht durch die transparente Schutzschicht hindurch erfolgt.

In einer weiteren Ausführungsform ist ein erfindungsgemäßes Identifikationsdokument vorgesehen, bei dem das wenigstens eine Blatt eine weitere personenbezogene Information aufweist, die zu der personenbezogenen Information des Bucheinbandes zumindest teilweise redundant ist oder diese ergänzt. Dabei kann die weitere personenbezogene Information sowohl mit bekannten Verfahren, insbesondere Druckverfahren, aber auch mit einem berührungslosen Markierungsverfahren erfolgen, was besonders bevorzugt ist. Darüber hinaus kann das wenigstens eine Blatt einen Datenträger aufweisen, auf dem zumindest teilweise die weitere personenbezogene Information des Blattes und/oder die personenbezogene Information des Bucheinbandes abgespeichert ist. Gemäß dieser Ausführungsform ist es also beispielsweise möglich, die gesamte personenbezogene Information auf einem Datenträger abzuspeichern und lediglich eine auf ein Mindestmaß beschränkte personenbezogene Information auf dem Bucheinband anzuordnen. Dadurch wird zum einen dem erfindungsgemäßen Grundgedanken einer einfachen Anbindung des Bucheinbandes an den Buchblock und zum anderen dem Umstand Rechnung getragen, dass eine umfangreiche personenbezogene Information, z. B. in Form biometrischer Daten, zuverlässig auf dem Datenträger abgespeichert werden kann.

Darüber hinaus versteht es sich von selbst, dass das wenigstens eine Blatt des Buchblocks wenigstens ein Sicherheitsmerkmal, insbesondere einen Sicherheitsfaden, ein Hologramm oder ein anderes optisch variables Element, aufweisen kann.

Der erfindungsgemäße Bucheinband für die Herstellung von buchartigen Identifikationsdokumenten weist die im Zusammenhang mit dem erfindungsgemäßen buchartigen Identifikationsdokument beschriebenen Vorteile, insbesondere eine Erhöhung der Fälschungssicherheit durch ein zusätzliches Sicherheitsmerkmal in Form der personenbezogenen Information auf. Zur Vermeidung von Wiederholungen wird daher auf die vorstehend gemachten Ausführungen zum buchartigen Identifikationsdokument verwiesen.

Das erfindungsgemäße Verfahren zur Herstellung eines buchartigen Identifikationsdokuments sieht vor, dass die Außenseite des Bucheinbandes mittels eines berührungslosen Markierungsverfahrens mit einer personenbezogenen Information versehen wird. Wie bereits erwähnt, ermöglicht das erfindungsgemäße Verfahren eine Erhöhung der Fälschungssicherheit eines buchartigen Identifikationsdokuments mit einer gegenüber dem aus der DE 10 2004 008 841 A1 bekannten Verfahren verringerten Anzahl an Verfahrensschritten. Neben den sich für das buchartige Identifikationsdokument ergebenden Vorteilen soll nicht unerwähnt bleiben, dass das erfindungsgemäße Verfahren wesentlich kostengünstiger als die aus dem Stand der Technik bekannten Personalisierungen des Bucheinbandes mittels Datenträger ist.

Bevorzugt wird der Bucheinband bei dem erfindungsgemäßen Verfahren mit einer personenbezogenen Information in Form von alphanumerischen Zeichen, Barcodes, Mustern, Mikroschriften und/ oder Bildern versehen. Erfindungsgemäß ist, die Vorderseite und die Rückseite des Bucheinbandes jeweils mit wenigstens einem Teil der personenbezogenen Information zu versehen. Dabei kann die personenbezogene Information vorteilhafterweise durch Einwirkung von Laserstrahlung in wenigsten eine Laserstrahlung absorbierende Schicht des Bucheinbandes eingeschrieben werden. Falls gewünscht, kann die personenbezogene Information aber auch mittels eines berührungslosen Tintenstrahl- oder Thermosublimationsverfahrens auf dem Bucheinband aufgebracht werden. Zweckmäßigerweise kann der Bucheinband mit einer nicht-personenbezogenen Information versehen werden, was vorteilhafterweise wiederum mit einem berührungslosen Markierungsverfahren erfolgen kann. Auch kann über der personenbezogenen und/oder der nicht-personenbezogenen Information wenigstens eine Schutzschicht aufgebracht werden. Im Falle einer Laserpersonalisierung kann die für die eingesetzte Strahlung transparente Schutzschicht bereits vor der Personalisierung aufgebracht werden.

Als besonders vorteilhaft erweist sich das erfindungsgemäße Verfahren, wenn der Bucheinband nach dem Verbinden von Bucheinband und wenigstens einem Blatt mit der personenbezogenen Information versehen wird. Dies hat den Vorteil, dass das Identifikationsdokument unabhängig von der Einbringung der personenbezogenen Information im Wesentlichen fertig gestellt werden kann. Damit ist die Herstellung des Identifikationsdokuments, d. h. das Erstellen der einzelnen Blätter des Buchblocks und des Bucheinbandes sowie das Binden zu einem buchartigen Wertdokument ein von der Personalisierung des Bucheinbandes völlig entkoppelter Vorgang. Die Fertigung des Dokuments kann demnach in den entsprechenden Spezialwerkstätten erfolgen mit entsprechender Endkontrolle, so dass zur Personalisierung nur qualitativ hochwertige Exemplare kommen. Die sich daran anschließende Personalisierung des buchartigen Identifikationsdokuments kann an einer beliebigen anderen Stelle, z. B. dezentral, in entsprechenden Personalisierungsstationen vorgenommen werden.

Darüber hinaus ist es besonders vorteilhaft, wenn zusammen mit der vorstehend beschriebenen Personalisierung des Bucheinbandes auch das wenigstens eine Blatt mit einer weiteren personenbezogenen Information versehen wird, die zu der personenbezogenen Information des Bucheinbandes zumindest teilweise redundant ist oder diese ergänzt. Dabei kann die weitere personenbezogene Information ebenfalls mit einem berührungslosen Markierungsverfahren erfolgen. Besonders zweckmäßig ist es dabei, wenn das wenigstens eine Blatt und der Bucheinband mittels desselben berührungslosen Markierungsverfahren mit der weiteren personenbezogenen Information bzw. der personenbezogenen Information versehen werden. Die für die Personalisierung des Bucheinbandes vorgesehene Personalisierungsstation wird in diesem Fall um eine Vorrichtung ergänzt, die das Dokument auf- und zuklappen kann. Eine solche Vorrichtung ist beispielsweise aus der EP 0 123 188 B1 bekannt und ermöglicht eine einfache automatisierte Personalisierung des wenigstens einen Blattes des Identifikationsdokuments.

Darüber hinaus ist es aber auch vorteilhaft möglich, dass die weitere personenbezogene Information des Blattes und/ oder die personenbezogene Information des Bucheinbandes zumindest teilweise auf einem Datenträger abgespeichert werden, der auf dem wenigstens einen Blatt angeordnet ist. In einem solchen Fall erfolgt in der Personalisierungsstation eine automatische Speicherung der Personalisierungsdaten auf dem Datenträger. Dabei kann die Speicherung besonders vorteilhaft nach dem Verbinden von Bucheinband und Buchblock erfolgen.

Das erfindungsgemäße Verfahren zur Herstellung eines Bucheinbandes für buchartige Identifikationsdokumente ermöglicht die Bereitstellung eines Bucheinbandes mit den in den vorstehenden Ausführungen beschriebenen Vorteilen, auf die zur Vermeidung von Wiederholungen verwiesen wird.
Im Folgenden wird ein Ausführungsbeispiel der Erfindung anhand der Zeichnung näher erläutert.

Es zeigen:
- Fig. 1: eine perspektivische Ansicht eines aufgeklappten erfindungsgemäßen buchartigen Identifikationsdokuments,
- Fig. 2: eine Aufsicht auf die Außenseite des Bucheinbandes des erfindungsgemäßen buchartigen Identifikationsdokuments der Fig. 1,
- Fig. 3: einen Querschnitt durch den Bucheinband entlang der Linie A - A in Fig. 2.

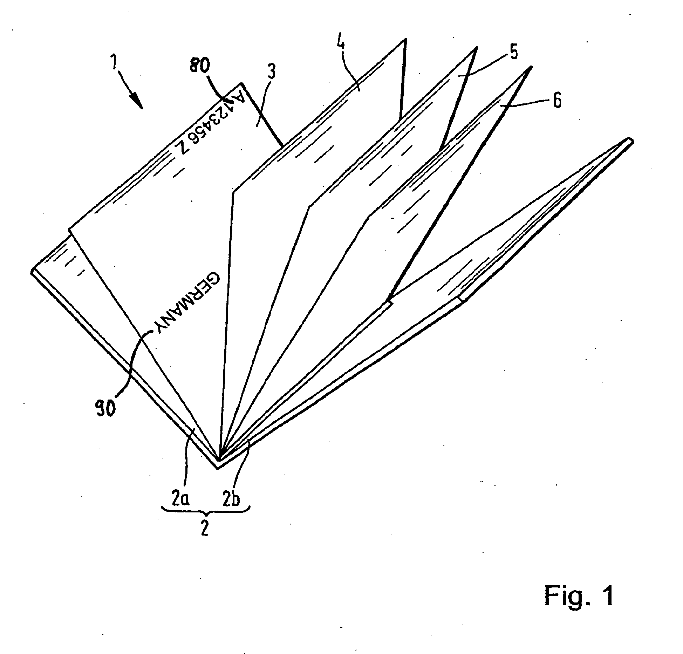

Fig.1 zeigt ein erfindungsgemäßes buchartiges Identifikationsdokument 1 in Form eines Reisepasses, der aus einem Bucheinband 2 mit einem vorderen Buchdeckel (Vorderseite) 2a und einen hinteren Buchdeckel (Rückseite) 2b, einem Blatt 3 mit personalisierter Information sowie weiteren Blättern 4, 5 und 6 besteht. Die Blätter 4 bis 6 sowie gegebenenfalls weitere, nicht dargestellte Blätter bestehen vorzugsweise aus Papier oder einem anderen Material mit einer papierähnlichen Oberflächenbeschaffenheit, die spätere Eintragungen, wie beispielsweise Verlängerungen oder Visa, erlaubt. Das Datenblatt 3, das neben der personenbezogenen auch nicht-personenbezogene Information aufweist, besteht vorzugsweise aus mindestens zwei transparenten Deckschichten in Form von Kunststofffolien aus Polyester (z. B. PET) und/ oder Polycarbonat (PC), zwischen welchen ein Inlett aus Papier oder Kunststoff eingeschlossen ist. In dem dargestellten Beispiel ist die Passnummer 80 als personenbezogene und die Länderbezeichnung 90 als nicht-personenbezogene Information auf dem Papierinlett des Blattes 3 mittels eines berührungslosen Lasermarkierungsverfahrens eingebracht. Die Blätter 3 bis 6 enthalten darüber hinaus weitere der Übersichtlichkeit halber nicht dargestellte Sicherheitselemente, wie einen Sicherheitsfaden, ein Wasserzeichen etc.

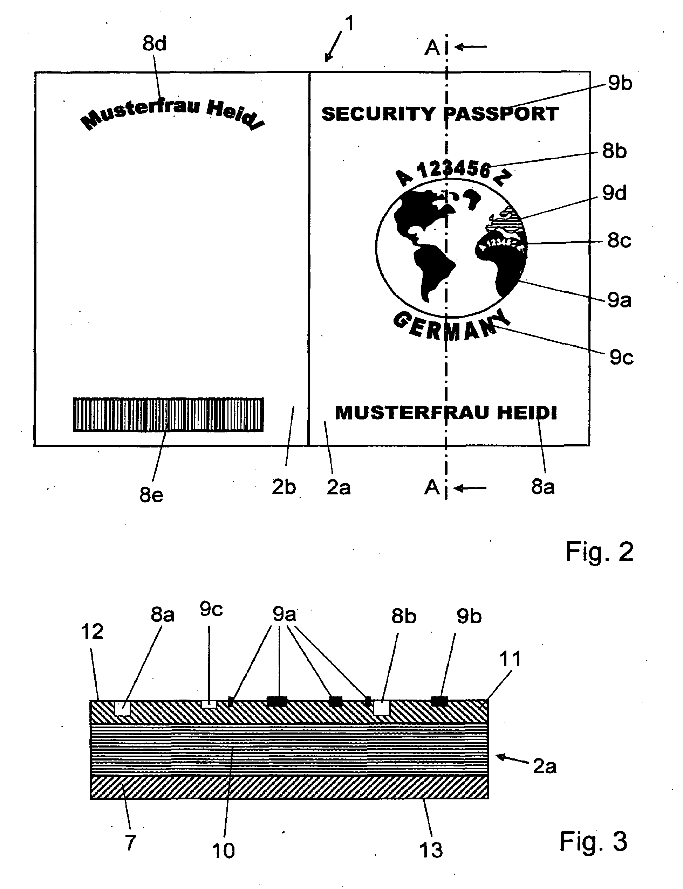

Fig. 2 zeigt eine Aufsicht auf die Außenseite 12 des Bucheinbandes 2 des vollständig aufgeklappten Reisepasses aus Fig. 1. Auf der Vorderseite 2a des Bucheinbandes 2 ist mittels eines Heißprägeverfahrens ein Heißprägeelement 9a in Form einer stilisierten Erdkugel aufgebracht. Das Heißprägeelement 9a ist zwecks besserem Kontrast in Schwarz wiedergegeben, während die Farbe in Wirklichkeit ein dunkler Goldton ist. Auch bei der Wortfolge "Security Passport" handelt es sich um ein mittels eines Heißprägeverfahrens aufgebrachtes Heißprägeelement 9b. Die auf der Vorderseite angeordneten Heißprägeelemente 9a und 9b stellen eine nicht-personenbezogene Information dar. Weiterhin ist auf der Vorderseite 2a des Bucheinbandes 2 das Wort "Germany" als weitere nicht-personenbezogene Information 9c angeordnet. Die Information 9c wurde allerdings nicht mit einem Heißprägeverfahren, sondern durch Einwirkung von Laserstrahlung in die Laserstrahlung absorbierende äußere Schicht 11 des Bucheinbandes eingebracht. Der Bucheinband 2 weist gemäß Fig. 3 eine innere Schicht 7 aus Papier oder papierähnlichem Material, eine verhältnismäßig stabil ausgeführte Schicht 10 aus Karton oder einem Kunststoffmaterial sowie die bereits genannte äußere Schicht 11 auf, die im Wesentlichen aus einem Laserstrahlung absorbierendem Kunststoffmaterial besteht, in das kleine Mengen IR-absorbierender Rußpartikel eingebracht sind. Als Strahlungsquelle wurde für die Personalisierung ein Nd:YAG-Laser mit einer Wellenlänge von 1064 nm eingesetzt. Da Schicht 11 des Bucheinbandes 2 bereits in diesem Wellenlängenbereich absorbiert und sie darüber hinaus noch die genannten IR-absorbierenden Rußpartikel enthält, kann die Information 9c problemlos in die Schicht 11 eingeschrieben werden. Wie in Fig. 3 dargestellt, wurde die Intensität der Laserstrahlung so gewählt, dass in denjenigen Bereichen, in denen die Information 9c eingebracht wurde, ein Materialaustrag aus der Schicht 11 stattfand. Diese Laserablation führt im Bereich der nicht-personenbezogenen Information 9c zu einer fühlbaren Vertiefung, also einer lokalen Änderung der Schichtdicke der äußeren Schicht 11. Durch die Einwirkung der Laserstrahlung wird im Bereich der Information 9c auch eine Änderung der Farbe der Schicht 11 hervorgerufen, weshalb sich die Information 9c farblich von den die Information umgebenden Bereichen der Schicht 11 abhebt. Zur Verdeutlichung dieser, durch die Einwirkung der Laserstrahlung hervorgerufenen Farbänderung im Bereich der Information 9c, wurde in Fig. 2 ein heller Grauton gewählt. Er dient nur zur Illustration der Farbänderung und entspricht nicht den echten Farbverhältnissen im Bereich der Information 9c in Schicht 11.

In dem Heißprägeelement 9a wurde durch Einwirkung von Laserstrahlung die Information 9d eingebracht. Dabei wurde in der stilisierten Erdkugel mittels des Lasers ein Streifenmuster im Bereich der Mitgliedsstaaten der Europäischen Union erzeugt. Das Muster wurde durch lokale Entfernung (Ablation) des Heißprägeelements im Bereich der weißen Streifen der Information 9d erhalten.

Erfindungsgemäß ist die Außenseite 12 des Bucheinbandes 2 des Reisepasses 1 mit einer personenbezogenen Information versehen. Das in Fig. 2 gezeigte Ausführungsbeispiel weist eine personenbezogene Information 8 auf, welche sich aus den Informationen 8a, 8b, 8c, 8d und 8e zusammensetzt. Bei der im unteren Bereich der Vorderseite 2a eingebrachten personenbezogenen Information 8a handelt es sich um den Namen und Vornamen des Passinhabers. Wie bereits im Zusammenhang mit der nicht-personenbezogenen Information 9c beschrieben, wurde die personenbezogene Information 8a durch Einwirkung von Laserstrahlung in die äußere Schicht 11 des Bucheinbandes 2 erzeugt. Dabei wurde die Intensität der Laserstrahlung so gewählt, dass im Bereich der eingebrachten Information 8a ein erheblicher Teil der Schicht 11 entfernt wurde. Auf diese Art und Weise ist die Information 8a besser fühlbar als die Information 9c, bei der die Tiefe der Laserablation in der Schicht 11 wesentlich geringer ist (siehe Fig. 3). Aufgrund der für die Erzeugung der Information 8a gewählten höheren Strahlintensität ergibt sich in diesem Bereich auch eine stärkere Farbänderung der Schicht 11 als etwa im Bereich der Information 9c. Demzufolge ist zur Illustration dieser Farbänderung in Fig. 2 die Information 8a in einem dunkleren Farbton als die Information 9c dargestellt. Die weitere personenbezogene Information 8b, bei der es sich um die auch auf dem Blatt 3 angeordnete Passnummer handelt, entspricht von Farbton und Ablationstiefe der Information 8a. Schließlich ist auf der Vorderseite 2a die Passnummer auch in Form einer in Fig. 2 vergrößert dargestellten Mikroschrift 8c enthalten, welche durch lokale Entfernung des Heißprägeelements 9a mittels Laserstrahlung erzeugt wurde. Somit sind bei Betrachtung der Vorderseite des Passes sowohl der Name des Passinhabers als auch die Passnummer ohne Hilfsmittel zu erkennen, während die Mikroschrift 8c nur mit geeigneten Lesegeräten gelesen werden kann.

Die Rückseite 2b des Bucheinbandes 2 weist als personenbezogene Information zum einen den Namen und Vornamen 8d des Passinhabers und zum anderen einen Barcode 8e auf, der die codierte Passnummer darstellt. Die auf der Rückseite 2b eingebrachte Information 8d und 8e wurde ebenfalls durch Einwirkung von Laserstrahlung auf die Schicht 11 erzeugt. Dabei weisen einzelne Bereiche des Barcodes aufgrund unterschiedlicher Laserintensitäten unterschiedliche Ablationstiefen und Farben auf, was bereits vorstehend im Zusammenhang mit Information 8a und 9c beschrieben wurde. In jedem Fall ist bei der dargestellten Ausführungsform sichergestellt, dass auch bei Betrachtung der Rückseite 2b zumindest der Name des Passinhabers ohne Öffnen oder Wenden des Passes 1 gelesen werden kann.

Bei der in den Figuren 1 bis 3 beschriebenen bevorzugten Ausführungsform des erfindungsgemäßen buchartigen Identifikationsdokuments 1 erfolgt die Einbringung der Information auf der Außenseite 12 des Bucheinbandes 2 und dem Datenblatt 3 des Buchblockes in derselben Laser-Personalisierungsstation nach dem Binden. Dabei wird das Auf- und Zuklappen des Identifikationsdokuments 1 vollautomatisch mittels einer geeigneten Vorrichtung vorgenommen welche, wie auch die Personalisierungsstation, nicht abgebildet ist.

## Patentansprüche

1. Buchartiges Identifikationsdokument (1), insbesondere Reisepass, Ausweis oder Visum, mit einem Bucheinband (2) und wenigstens einem mit dem Bucheinband verbundenen Blatt (4, 5, 6), **dadurch gekennzeichnet, dass** die Außenseite (12) des Bucheinbandes eine mittels eines berührungslosen Markierungsverfahrens eingebrachte personenbezogene Information (8) aufweist, und dass die Vorderseite (2a) und die Rückseite (2b) des Bucheinbandes jeweils wenigstens einen Teil der personenbezogenen Information aufweisen.

2. Buchartiges Identifikationsdokument nach Anspruch 1, **dadurch gekennzeichnet, dass** die personenbezogene Information in Form von alphanumerischen Zeichen, Barcodes, Mustern, Mikroschrift und/ oder Bildern vorliegt.

3. Buchartiges Identifikationsdokument nach wenigstens einem der Ansprüche 1 bis 2, **dadurch gekennzeichnet, dass** der Bucheinband wenigstens eine Laserstrahlung absorbierende Schicht aufweist, in die die personenbezogene Information durch Einwirkung von Laserstrahlung eingebracht ist.

4. Buchartiges Identifikationsdokument nach Anspruch 3, **dadurch gekennzeichnet, dass** die personenbezogene Information in Form einer visuell erkennbaren Änderung der optischen Eigenschaften der wenigstens einen Schicht vorliegt.

5. Buchartiges Identifikationsdokument nach Anspruch 3 oder 4, **dadurch gekennzeichnet, dass** die personenbezogene Information in Form einer lokalen Änderung der Schichtdicke der wenigstens einen Schicht vorliegt.

6. Buchartiges Identifikationsdokument nach Anspruch 5, **dadurch gekennzeichnet, dass** die personenbezogene Information in Form einer Laserablation vorliegt.

7. Buchartiges Identifikationsdokument nach Anspruch 6, **dadurch gekennzeichnet, dass** die wenigstens eine Schicht ein Metall aufweist und die Laserablation eine Demetallisierung ist.

8. Buchartiges Identifikationsdokument nach Anspruch 5, **dadurch gekennzeichnet, dass** die personenbezogene Information in Form einer fühlbaren Reliefstruktur, insbesondere als Noppen, vorliegt.

9. Buchartiges Identifikationsdokument nach wenigstens einem der Ansprüche 1 bis 8, **dadurch gekennzeichnet, dass** die personenbezogene Information mittels eines berührungslosen Tintenstrahl- oder Thermosublimationsverfahrens aufgebracht ist.

10. Buchartiges Identifikationsdokument nach wenigstens einem der Ansprüche 1 bis 9, **dadurch gekennzeichnet, dass** der Bucheinband eine nicht-personenbezogene Information, insbesondere alphanumerischen Zeichen, Barcodes, Muster, Mikroschriften, Beugungsstrukturen und/oder Bilder, aufweist.

11. Buchartiges Identifikationsdokument nach Anspruch 10, **dadurch gekennzeichnet, dass** die nicht-personenbezogene Information mittels eines berührungslosen Markierungsverfahrens eingebracht ist.

12. Buchartiges Identifikationsdokument nach Anspruch 10 oder 11, **dadurch gekennzeichnet, dass** die personenbezogene und die nicht-personenbezogene Information des Bucheinbandes zumindest teilweise überlappend angeordnet sind und/oder in einem inneren Sinnzusammenhang stehen.

13. Buchartiges Identifikationsdokument nach wenigstens einem der Ansprüche 10 bis 12, **dadurch gekennzeichnet, dass** über der nicht-personenbezogenen Information und/oder über der personenbezogenen Information wenigstens eine Schutzschicht angeordnet ist.

14. Buchartiges Identifikationsdokument nach wenigstens einem der Ansprüche 1 bis 13, **dadurch gekennzeichnet, dass** das wenigstens eine Blatt eine weitere personenbezogene Information aufweist, die zu der personenbezogenen Information des Bucheinbandes zumindest teilweise redundant ist oder diese ergänzt.

15. Buchartiges Identifikationsdokument nach Anspruch 14, **dadurch gekennzeichnet, dass** die weitere personenbezogene Information mittels eines berührungslosen Markierungsverfahrens eingebracht ist.

16. Buchartiges Identifikationsdokument nach Anspruch 14 oder 15, **dadurch gekennzeichnet, dass** das wenigstens eine Blatt einen Datenträger aufweist, auf dem zumindest teilweise die weitere personenbezogene Information des Blattes und/oder die personenbezogene Information des Bucheinbandes abgespeichert ist.

17. Bucheinband für die Herstellung von buchartigen Identifikationsdokumenten, insbesondere Reisepässen, Ausweisen oder Visa, **dadurch gekennzeichnet, dass** der Bucheinband wie in wenigstens einem der Ansprüche 1 bis 13 beschrieben ausgebildet ist.

18. Verfahren zur Herstellung eines buchartigen Identifikationsdokuments, insbesondere eines Reisepasses, Ausweises oder Visums, mit einem Bucheinband und wenigstens einem mit dem Bucheinband verbundenen Blatt, **dadurch gekennzeichnet, dass** die Außenseite des Bucheinbandes mittels eines berührungslosen Markierungsverfahrens mit einer personenbezogenen Information versehen wird, und dass die Vorderseite und die Rückseite des Bucheinbandes jeweils mit wenigstens einem Teil der personenbezogenen Information versehen werden.

19. Verfahren zur Herstellung eines buchartigen Identifikationsdokuments nach Anspruch 18, **dadurch gekennzeichnet, dass** der Bucheinband mit einer personenbezogenen Information in Form von alphanumerischen Zeichen, Barcodes, Mustern, Mikroschrift und/ oder Bildern versehen wird.

20. Verfahren zur Herstellung eines buchartigen Identifikationsdokuments nach wenigstens einem der Ansprüche 18 bis 19, **dadurch gekennzeichnet, dass** die personenbezogene Information durch Einwirkung von Laserstrahlung in wenigstens eine Laserstrahlung absorbierende Schicht des Bucheinbandes eingeschrieben wird.

21. Verfahren zur Herstellung eines buchartigen Identifikationsdokuments nach wenigstens einem der Ansprüche 18 bis 20, **dadurch gekennzeichnet, dass** die personenbezogene Information mittels eines berührungslosen Tintenstrahl- oder Thermosublimationsverfahrens auf dem Bucheinband aufgebracht wird.

22. Verfahren zur Herstellung eines buchartigen Identifikationsdokuments nach wenigstens einem der Ansprüche 18 bis 21, **dadurch gekennzeichnet, dass** der Bucheinband mit einer nicht-personenbezogenen Information, insbesondere alphanumerischen Zeichen, Barcodes, Mustern, Mikroschriften und/oder Bildern, versehen wird.

23. Verfahren zur Herstellung eines buchartigen Identifikationsdokuments nach Anspruch 22, **dadurch gekennzeichnet, dass** der Bucheinband mittels eines berührungslosen Markierungsverfahrens mit der nicht-personenbezogene Information versehen wird.

24. Verfahren zur Herstellung eines buchartigen Identifikationsdokuments nach wenigstens einem der Ansprüche 18 bis 23, **dadurch gekennzeichnet, dass** der Bucheinband nach dem Verbinden von Bucheinband und wenigstens einem Blatt mit der personenbezogenen Information versehen wird.

25. Verfahren zur Herstellung eines buchartigen Identifikationsdokuments nach wenigstens einem der Ansprüche 22 bis 24, **dadurch gekennzeichnet, dass** über der nicht-personenbezogenen Information und/oder über der personenbezogenen Information wenigstens eine Schutzschicht aufgebracht wird.

26. Verfahren zur Herstellung eines buchartigen Identifikationsdokuments nach wenigstens einem der Ansprüche 18 bis 25, **dadurch gekennzeichnet, dass** das wenigstens eine Blatt mit einer weiteren personenbezogenen Information versehen wird, die zu der personenbezogenen Information des Bucheinbandes zumindest teilweise redundant ist oder diese ergänzt.

27. Verfahren zur Herstellung eines buchartigen Identifikationsdokuments nach Anspruch 26, **dadurch gekennzeichnet, dass** das wenigstens eine Blatt mittels eines berührungslosen Markierungsverfahrens mit der weiteren personenbezogenen Information versehen wird.

28. Verfahren zur Herstellung eines buchartigen Identifikationsdokuments nach Anspruch 27, **dadurch gekennzeichnet, dass** das wenigstens eine Blatt und der Bucheinband mittels desselben berührungslosen Markierungsverfahrens mit der weiteren personenbezogenen Information bzw. der personenbezogenen Information versehen werden.

29. Verfahren zur Herstellung eines buchartigen Identifikationsdokuments nach wenigstens einem der Ansprüche 26 bis 28, **dadurch gekennzeichnet, dass** die weitere personenbezogene Information des Blattes und/oder die personenbezogene Information des Bucheinbandes zumindest teilweise auf einem Datenträger abgespeichert werden, der auf dem wenigstens einen Blatt angeordnet ist.

30. Verfahren zur Herstellung eines buchartigen Identifikationsdokuments nach Anspruch 29, **dadurch gekennzeichnet, dass** die weitere personenbezogene Information nach dem Verbinden von Bucheinband und wenigstens einem Blatt auf dem Datenträger abgespeichert wird und/oder das wenigstens eine Blatt mit der weiteren personenbezogenen Information versehen wird.

31. Verfahren zur Herstellung eines Bucheinbandes für buchartige Identifikationsdokumente, insbesondere Reisepässe, Ausweise oder Visa, **dadurch gekennzeichnet, dass** der Bucheinband wie in wenigstens einem der Ansprüche 18 bis 25 beschrieben ausgebildet wird.

## Claims

1. A book-like identification document (1), in particular a passport, identification card or visa, having a book cover (2) and at least one sheet (4, 5, 6) connected to the book cover, **characterized in that** the outer side (12) of the book cover has a person-related information item (8) incorporated by means of a contactless marking procedure, and that the front side (2a) and the back side (2b) of the book cover have respectively at least one part of the person-related information item.

2. The book-like identification document according to claim 1, **characterized in that** the person-related information item is present in the form of alphanumeric characters, bar codes, patterns, micro script and/or images.

3. The book-like identification document according to at least one of the claims 1 to 2, **characterized in that** the book cover has at least one laser-radiation absorbing layer in which the person-related information item is incorporated by the action of laser radiation.

4. The book-like identification document according to claim 3, **characterized in that** the person-related information item is present in the form of a visually recognizable change of the optical properties of the at least one layer.

5. The book-like identification document according to claim 3 or 4, **characterized in that** the person-related information item is present in the form of a local change of the layer thickness of the at least one layer.

6. The book-like identification document according to claim 5, **characterized in that** the person-related information item is present in the form of a laser ablation.

7. The book-like identification document according to claim 6, **characterized in that** the at least one layer has a metal and the laser ablation is a demetalization.

8. The book-like identification document according to claim 5, **characterized in that** the person-related information item is present in the form of a tactile relief structure, in particular in the form of knobs.

9. The book-like identification document according to at least one of the claims 1 to 8, **characterized in that** the person-related information item is applied by means of a contactless ink-jet or thermal sublimation procedure.

10. The book-like identification document according to at least one of the claims 1 to 9, **characterized in that** the book cover has a non-person-related information item, in particular alphanumeric characters, bar codes, patterns, micro scripts, diffractive structures and/or images.

11. The book-like identification document according to claim 10, **characterized in that** the non-person-related information item is incorporated by means of a contactless marking procedure.

12. The book-like identification document according to claim 10 or 11, **characterized in that** the person-related information item and the non-person-related information item of the book cover are arranged so as to overlap at least partially and/or are intrinsically mutually related in meaningful fashion.

13. The book-like identification document according to at least one of the claims 10 to 12, **characterized in that** above the non-person-related information item and/or above the person-related information item there is arranged at least one protective layer.

14. The book-like identification document according to at least one of the claims 1 to 13, **characterized in that** the at least one sheet has a further person-related information item that is at least partially redundant to or complements the person-related information item of the book cover.

15. The book-like identification document according to claim 14, **characterized in that** the further person-related information item is incorporated by means of a contactless marking procedure.

16. The book-like identification document according to claim 14 or 15, **characterized in that** the at least one sheet has a data carrier on which there is stored at least partially the further person-related information item of the sheet and/or the person-related information item of the book cover.

17. A book cover for manufacturing book-like identification documents, in particular passports, identification cards or visa, **characterized in that** the book cover is configured as described in at least one of the claims 1 to 13.

18. A method for manufacturing a book-like identification document, in particular a passport, identification card or visa, having a book cover and at least one sheet connected to the book cover, **characterized in that** the outer side of the book cover is supplied with a person-related information item by means of a contactless marking procedure, and that the front side and the back side of the book cover are supplied respectively with at least a part of the person-related information item.

19. The method for manufacturing a book-like identification document according to claim 18, **characterized in that** the book cover is supplied with a person-related information item in the form of alphanumeric characters, bar codes, patterns, micro script and/or images.

20. The method for manufacturing a book-like identification document according to at least one of the claims 18 to 19, **characterized in that** the person-related information item is inscribed by the action of laser radiation into at least one laser-radiation absorbing layer of the book cover.

21. The method for manufacturing a book-like identification document according to at least one of the claims 18 to 20, **characterized in that** the person-related information item is applied to the book cover by means of a contactless ink-jet or thermal sublimation procedure.

22. The method for manufacturing a book-like identification document according to at least one of the claims 18 to 21, **characterized in that** the book cover is supplied with a non-person-related information item, in particular alphanumeric characters, bar codes, patterns, micro scripts and/or images.

23. The method for manufacturing a book-like identification document according to claim 22, **characterized in that** the book cover is supplied with the non-person-related information item by means of a contactless marking procedure.

24. The method for manufacturing a book-like identification document according to at least one of the claims 18 to 23, **characterized in that** the book cover is supplied with the person-related information item after connecting the book cover and the at least one sheet.

25. The method for manufacturing a book-like identification document according to at least one of the claims 22 to 24, **characterized in that** above the non-person-related information item and/or above the person-related information item there is applied at least one protective layer.

26. The method for manufacturing a book-like identification document according to at least one of the claims 18 to 25, **characterized in that** the at least one sheet is supplied with a further person-related information item that is at least partially redundant to or complements the person-related information item of the book cover.

27. The method for manufacturing a book-like identification document according to claim 26, **characterized in that** the at least one sheet is supplied with the further person-related information item by means of a contactless marking procedure.

28. The method for manufacturing a book-like identification document according to claim 27, **characterized in that** the at least one sheet and the book cover are supplied with the further person-related information item and/or the person-related information item by means of the same contactless marking procedure.

29. The method for manufacturing a book-like identification document according to at least one of the claims 26 to 28, **characterized in that** the further person-related information item of the sheet and/or the person-related information item of the book cover are stored at least partially on a data carrier that is arranged on the at least one sheet.

30. The method for manufacturing a book-like identification document according to claim 29, **characterized in that** the further person-related information item is stored on the data carrier and/or the at least one sheet is supplied with the further person-related information item after connecting the book cover and the at least one sheet.

31. A method for manufacturing a book cover for book-like identification documents, in particular passports, identification cards or visa, **characterized in that** the book cover is configured as described in at least one of the claims 18 to 25.

## Revendications

1. Document d'identification en forme de livre (1), en particulier passeport, pièce d'identité ou visa, ayant une jaquette (2) et au moins une feuille (4, 5, 6) reliée à la jaquette, **caractérisé en ce que** la face extérieure (12) de la jaquette comporte une information (8) personnelle insérée au moyen d'un procédé de marquage sans contact, et **en ce que** la face avant (2a) et la face arrière (2b) de la jaquette comportent respectivement au moins une partie de l'information personnelle.

2. Document d'identification en forme de livre selon la revendication 1, **caractérisé en ce que** l'information personnelle se trouve sous forme de caractères alphanumériques, de code-barres, de motifs, de micro-écriture et/ou d'images.

3. Document d'identification en forme de livre selon au moins une des revendications de 1 à 2, **caractérisé en ce que** la jaquette comporte au moins une couche absorbant le rayonnement laser dans laquelle l'information personnelle est insérée par effet de rayonnement laser.

4. Document d'identification en forme de livre selon la revendication 3, **caractérisé en ce que** l'information personnelle se trouve sous forme d'une modification visuellement reconnaissable des propriétés optiques de la au moins une couche.

5. Document d'identification en forme de livre selon la revendication 3 ou 4, **caractérisé en ce que** l'information personnelle se trouve sous forme d'une modification locale de l'épaisseur de couche de la au moins une couche.

6. Document d'identification en forme de livre selon la revendication 5, **caractérisé en ce que** l'information personnelle se trouve sous forme d'une ablation au laser.

7. Document d'identification en forme de livre selon la revendication 6, **caractérisé en ce que** la au moins une couche comporte un métal et **en ce que** l'ablation au laser est une démétallisation.

8. Document d'identification en forme de livre selon la revendication 5, **caractérisé en ce que** l'information personnelle se trouve sous forme d'une structure en relief palpable, en particulier sous forme de picots.

9. Document d'identification en forme de livre selon au moins une des revendications de 1 à 8, **caractérisé en ce que** l'information personnelle est appliquée au moyen d'un procédé jet d'encre ou thermosublimation sans contact.

10. Document d'identification en forme de livre selon au moins une des revendications de 1 à 9, **caractérisé en ce que** la jaquette comporte une information non personnelle, en particulier des caractères alphanumériques, code-barres, motifs, micro-écritures, structures de diffraction et/ou images.

11. Document d'identification en forme de livre selon la revendication 10, **caractérisé en ce que** l'information non personnelle est insérée au moyen d'un procédé de marquage sans contact.

12. Document d'identification en forme de livre selon la revendication 10 ou 11, **caractérisé en ce que** l'information personnelle et l'information non personnelle de la jaquette sont agencées de manière se chevauchant au moins partiellement et/ou se trouvent en relation de sens interne.

13. Document d'identification en forme de livre selon au moins une des revendications de 10 à 12, **caractérisé en ce qu'**au moins une couche de protection est agencée par-dessus l'information non personnelle et/ou par-dessus l'information personnelle.

14. Document d'identification en forme de livre selon au moins une des revendications de 1 à 13, **caractérisé en ce que** la au moins une feuille comporte une information supplémentaire personnelle qui est au moins partiellement redondante à l'information personnelle de la jaquette ou qui la complète.

15. Document d'identification en forme de livre selon la revendication 14, **caractérisé en ce que** l'information supplémentaire personnelle est insérée au moyen d'un procédé de marquage sans contact.

16. Document d'identification en forme de livre selon la revendication 14 ou 15, **caractérisé en ce que** la au moins une feuille comporte un support de données sur lequel, au moins partiellement, l'information supplémentaire personnelle de la feuille et/ou l'information supplémentaire personnelle de la jaquette est mémorisée.

17. Jaquette destinée à la fabrication de documents d'identification en forme de livres, en particulier passeports, pièces d'identité ou visas, **caractérisée en ce que** la jaquette est réalisée comme il est décrit dans au moins une des revendications de 1 à 13.

18. Procédé de fabrication d'un document d'identification en forme de livre, en particulier d'un passeport, d'une pièce d'identité ou d'un visa, ayant une jaquette et au moins une feuille reliée à la jaquette, **caractérisé en ce que** la face extérieure de la jaquette est pourvue, au moyen d'un procédé de marquage sans contact, d'une information personnelle, et **en ce que** la face avant et la face arrière de la jaquette sont respectivement pourvues d'au moins une partie de l'information personnelle.

19. Procédé de fabrication d'un document d'identification en forme de livre selon la revendication 18, **caractérisé en ce que** la jaquette est pourvue d'une information personnelle sous forme de caractères alphanumériques, code-barres, motifs, micro-écriture et/ou images.

20. Procédé de fabrication d'un document d'identification en forme de livre selon au moins une des revendications de 18 à 19, **caractérisé en ce que** l'information personnelle est écrite par effet de rayonnement laser dans au moins une couche de la jaquette absorbant le rayonnement laser.

21. Procédé de fabrication d'un document d'identification en forme de livre selon au moins une des revendications de 18 à 20, **caractérisé en ce que** l'information personnelle est appliquée sur la jaquette au moyen d'un procédé jet d'encre ou thermosublimation sans contact.

22. Procédé de fabrication d'un document d'identification en forme de livre selon au moins une des revendications de 18 à 21, **caractérisé en ce que** la jaquette est pourvue d'une information non personnelle, en particulier de caractères alphanumériques, code-barres, motifs, micro-écriture et/ou images.

23. Procédé de fabrication d'un document d'identification en forme de livre selon la revendication 22, **caractérisé en ce que** la jaquette est pourvue, au moyen d'un procédé sans contact, de l'information non personnelle.

24. Procédé de fabrication d'un document d'identification en forme de livre selon au moins une des revendications de 18 à 23, **caractérisé en ce que** la jaquette est pourvue, après la reliure de la jaquette et d'au moins une feuille, de l'information personnelle.

25. Procédé de fabrication d'un document d'identification en forme de livre selon au moins une des revendications de 22 à 24, **caractérisé en ce que**, par-dessus l'information non personnelle et/ou par-dessus l'information personnelle, au moins une couche de protection est appliquée.

26. Procédé de fabrication d'un document d'identification en forme de livre selon au moins une des revendications de 18 à 25, **caractérisé en ce que** la au moins une feuille est pourvue d'une information supplémentaire personnelle qui est au moins partiellement redondante à l'information personnelle de la jaquette ou qui la complète.

27. Procédé de fabrication d'un document d'identification en forme de livre selon selon la revendication 26, **caractérisé en ce que** la au moins une feuille est pourvue, au moyen d'un procédé de marquage sans contact, de l'information supplémentaire personnelle.

28. Procédé de fabrication d'un document d'identification en forme de livre selon selon la revendication 27, **caractérisé en ce que** la au moins une feuille est pourvue et la jaquette sont pourvus, au moyen du même procédé de marquage sans contact, de l'information supplémentaire personnelle ou de l'information personnelle.

29. Procédé de fabrication d'un document d'identification en forme de livre selon au moins une des revendications de 26 à 28, **caractérisé en ce que** l'information supplémentaire personnelle de la feuille et/ou l'information personnelle de la jaquette sont au moins partiellement mémorisées dans un support de données qui est agencé sur la au moins une feuille.

30. Procédé de fabrication d'un document d'identification en forme de livre selon la revendication 29, **caractérisé en ce que** l'information supplémentaire personnelle est, après la reliure de la jaquette et d'au moins une feuille, mémorisée dans le support de données et/ou la au moins une feuille est pourvue de l'information supplémentaire personnelle.

31. Procédé de fabrication d'une jaquette pour documents d'identification en forme de livres, en particulier passeports, pièces d'identité ou visas, **caractérisé en ce que** la jaquette est réalisé comme il est décrit dans au moins une des revendications de 18 à 25.
